(19) Europäisches Patentamt
European Patent Office
Office européen des brevets

(11) Publication number : **0 469 713 A1**

(12) **EUROPEAN PATENT APPLICATION**

(21) Application number : **91305797.2**

(22) Date of filing : **26.06.91**

(51) Int. Cl.⁵ : **F16B 2/00, F16B 5/02, E04F 15/18**

(30) Priority : **02.08.90 DE 9011344 U**

(43) Date of publication of application :
**05.02.92 Bulletin 92/06**

(84) Designated Contracting States :
**DE ES FR GB IT**

(71) Applicant : **EMHART INC.**
**Drummond Plaza Office Park, 1423, Kirkwood Highway**
**Newark, Delaware 19711 (US)**

(72) Inventor : **Baum, Heinz-Otto**
**Klain-Lindenerstrasse 48**
**W-6300 Giessen-Allendorf (DE)**

(74) Representative : **Wetters, Basil David Peter et al**
**Emhart Patents Department, Lyn House, 39, The Parade**
**Oadby, Leicester LE2 5BB (GB)**

(54) **Fastener.**

(57)    Fastener for the removable attachment of a covering to a surface to which at least one vertical stud is fixed wherein a tube is provided which has an axial passage (2) to receive the stud (5), has a rotationally symmetrical outer periphery and is rotatably arranged relative to the covering held in the desired position thereby, and in that the internal wall (10) of the central portion (3) of the tube has a threaded portion (4) engaging with the external thread of the stud (5).

    The thread of the threaded portion (4) can optionally be shaped or cut by the external thread of the stud (8) as the tube (1) is turned on the stud (8).

# FIG. 2

Fasteners are known with which a covering is attached to a surface such as a floor on which mutually spaced vertical studs are fixed. In known devices of this type, however, the covering can be exchanged for a new one, for example in the event of wear or damage, only with great difficulty, if at all. The covering often sticks at least in part to the floor, making removal extremely difficult. Consequently, the object of the invention is to construct a device of the above-mentioned type such that the covering can be removably attached to a surface such as a floor without the need to use technically complex means for this purpose.

According to the present invention, this object is achieved by providing a tube which has an axial passage to receive the stud, which has a rotationally symmetrical outer periphery and which is rotatably arranged relative to the covering held in the desired position thereby, and by providing the internal wall of the central portion of the tube with a threaded portion engaging with the external thread of the stud.

The essential advantage of the design according to the invention of a fastener is that the covering which is to cover the surface or floor does not have to be stuck to it but merely has to be held by at least one fastener according to the invention which is constructed such that it receives the edge regions of the covering and can be screwed to the stud provided on the surface or floor, and this screw connection can be released merely by rotating the tube against the thread direction of the stud. This possibility arises according to the invention because the tube can carry, on its outer periphery, a layer of a suitable plastics material which does not form a chemical or mechanical bond with the adjacent covering. This layer can also be formed by a simple air gap. It is preferable to produce the layer from polyvinylchloride (PVC) and to shrink it in the warm state under vacuum onto the tube which, in this case, can be composed of POM (polyacetal resin) so that the PVC layer does not adhere to the tube.

A further advantage is that the tube can be simply produced by injection moulding without the need to use technically complex tools for this purpose.

Moreover, as the tube is inexpensive, replacement by a new one when the covering is exchanged is tolerable.

The fastener according to the invention can be used wherever a covering has to be held on a solid floor. It is preferably used for securing damping mats on the body sheet of a car or vehicle in which these damping mats provide insulation from noise. For example, the floor mats of a vehicle can be secured on the body sheet in this way.

In order that the invention can be better understood a preferred embodiment will now be described by way of example in greater detail with reference to the accompanying drawings in which :-

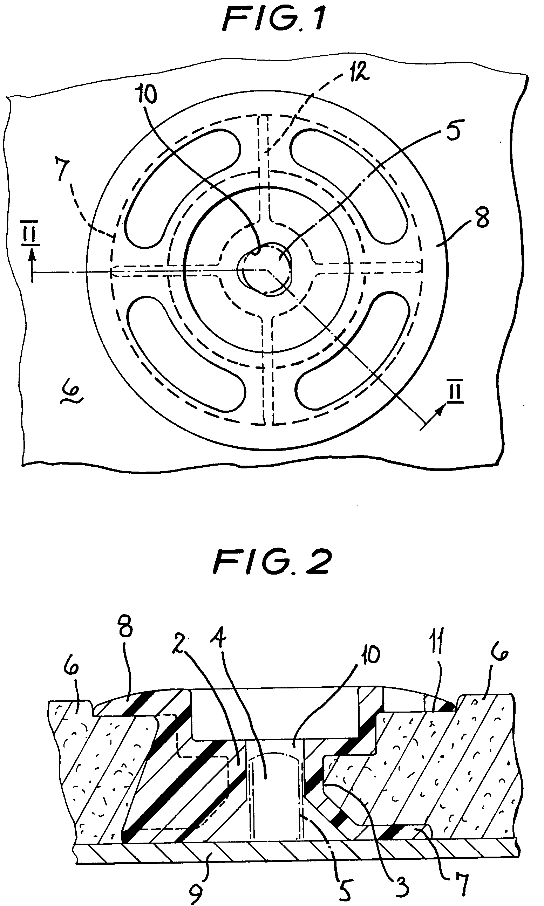

Figure 1 shows a plan view of the fastener, and Figure 2 shows a sectional view along the arrows according to Figure 1.

A plastics tube 1 having an enlarged head 8 and a base flange 7 is shown in the drawings. The head 8 has a greater external diameter than the remaining part of the tube 1 including base flange 7. The tube 1 has an axial passage creating an annular central region 3, the internal diameter of whose internal wall 10 is selected according to the external diameter of a threaded stud 5. This stud 5, which is welded, for example, to floor 9 carrying it, consists of a material which is harder than the material of the tube 1 and is, for example, a steel stud. Covering 6 is secured on the floor 9 by the tube, this covering being, for example, heat insulating or sound-damping mat of conventional material used for such purposes.

Once the mat 6 has been laid in the external recesses of the tube 1, the tube 1 is rotated on the stud, producing a threaded portion 4 of which the thread is shaped or cut out by the external thread of the stud (so-called self-tapping thread). The nut and therefore the covering 6 are thus fixed on the surface of the floor 9 by the mating threads.

Release of the tube 1 from the stud 5 causes the covering 6 to move from the floor 9 so that the covering 6 can be exchanged for another one, for example because of wear or the like, the threaded peg 5 nevertheless remaining firmly on the floor 9. To enable the tube 2 to rotate against the covering 6 it has, on its external periphery, a layer 11 which can be, for example, a plastics material which does not produce a mechanical or chemical connection with the adjacent face of the covering 6. (Alternatively, the function of this layer can also be fulfilled by an air gap.) In the assembled state, the head of the tube 1 is also covered by the covering 6 except for a central opening which can be covered, for example by a closure cap, after assembly and into which a suitable tool can be inserted to turn tube 1 to release it from the stud 8.

As shown in Figure 1, the tube is stiffened by means of webs 12 to make it stronger. As the base flange 7 is smaller in external diameter than the external diameter of the head 8, tube 1 can easily be separated from the stud 5.

Clearly, many slight variations can be made to the fastener within the scope of the present invention.

## Claims

1. Fastener for the removable attachment of a covering to a floor, on which at least one vertical stud is fixed, characterised in that there is provided a tube (1) which has an axial passage (2) to receive the stud (5) which has a rotationally symmetrical outer periphery and is rotatably arranged relative to the covering held in the desired position thereby, and in that the internal wall (10) of the central portion (3) of the tube (1) has a threaded portion (4) engaging with the external thread of the stud (5).

2. Fastener according to claim 1, wherein the thread of the threaded portion (4) is shaped or cut by the external thread of the stud (8) as the tube (1) is turned on the stud (8).

3. Fastener according to one of claims 1 or 2, wherein the tube has an annular head (8) and a base flange (7) and in that the annular head (8) is greater in external diameter than the base flange (7) while the remaining peripheral surface of the tube serves to receive the covering (6).

4. Fastener according to any one of the preceding claims, wherein a central recess for receiving a tool which serves to rotate the tube is provided in the head (8) of the tube (1).

5. Fastener according to any one of the preceding claims, wherein the tube has an external layer (11) which does not produce a mechanical or chemical bond with the covering (6).

6. Fastener according to claim 5, wherein the external layer (11) is an air gap.

7. Fastener according to claim 1, wherein the tube (1) is produced from a plastics material, in particular from polyacetal resin, while the layer surrounding it consists of PVC.

# FIG.1

# FIG.2

EP 0 469 713 A1

| | European Patent Office | EUROPEAN SEARCH REPORT | Application Number |
|---|---|---|---|

| DOCUMENTS CONSIDERED TO BE RELEVANT | | | EP 91305797.2 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | CH - A5 - 666 330 (ELCO INDUSTRIES) * Abstract * | 1,3,7 | F 16 B  2/00 F 16 B  5/02 E 04 F 15/18 |
| A | AT - B - 392 330 (SFS STADLER) * Abstract; fig. 2,20,21 * | 1,3,7 | |
| A | AT - B - 388 409 (SFS STADLER) * Abstract * | 1,3,7 | |

TECHNICAL FIELDS SEARCHED (Int. Cl.5)

E 04 D  3/00
E 04 D  5/00
E 04 F 15/00
F 16 B  2/00
F 16 B  5/00

The present search report has been drawn up for all claims

| Place of search | Date of completion of the search | Examiner |
|---|---|---|
| VIENNA | 07-10-1991 | RIEMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5